Europäisches Patentamt

European Patent Office

Office européen des brevets

(11) Veröffentlichungsnummer : **0 049 735**
**B1**

# EUROPÄISCHE PATENTSCHRIFT

(45) Veröffentlichungstag der Patentschrift :
**19.12.84**

(21) Anmeldenummer : **81104913.9**

(22) Anmeldetag : **25.06.81**

(51) Int. Cl.³ : **H 02 K 11/00, H 02 K 3/32, H 02 K 9/19**

(54) **Ölgekühlter Generator.**

(30) Priorität : **11.10.80 DE 3038444**

(43) Veröffentlichungstag der Anmeldung :
**21.04.82 Patentblatt 82/16**

(45) Bekanntmachung des Hinweises auf die Patenterteilung : **19.12.84 Patentblatt 84/51**

(84) Benannte Vertragsstaaten :
**BE DE FR GB**

(56) Entgegenhaltungen :
DE-A- 1 463 865
DE-A- 1 903 175
DE-A- 2 052 808
DE-A- 2 352 225
DE-A- 2 522 883
DE-A- 2 733 898
DE-A- 2 848 410
DE-B- 1 155 527
US-A- 4 221 982

(73) Patentinhaber : **ROBERT BOSCH GMBH**
**Postfach 50**
**D-7000 Stuttgart 1 (DE)**

(72) Erfinder : **Frister, Manfred, Dipl.-Ing.**
**Wolfsgalgen 29**
**D-7141 Schwieberdingen (DE)**
Erfinder : **Pflüger, Gerhard**
**Schellingstrasse 2**
**D-7145 Markgröningen (DE)**
Erfinder : **Philipp, Norbert**
**Neuffenstrasse 34**
**D-7141 Möglingen (DE)**
Erfinder : **Schmid, Hans-Dieter, Dr. Dipl.-Ing.**
**Kamenzer Strasse 8**
**D-8500 Nürnberg 60 (DE)**

**Beschreibung**

Stand der Technik

Die Erfindung geht aus von einem Generator nach der Gattung des Hauptanspruches. Generatoren für Nutzfahrzeuge werden oft unter extremen Bedingungen, wie Staub, Schmutz, Nässe, betrieben. Trotzdem soll der Generator über seine volle Lebensdauer störungsfrei betrieben werden können. Hier muß deshalb gegen Staub und Schmutz und Spritzwasser geschützt und unter allen Umständen auch ausreichend gekühlt werden können. Im allgemeinen reichen luftgekühlte und fettgeschmierte Generatoren, die speziell für solche Einsätze entwickelt worden sind, aus. In manchen Fällen jedoch können die geforderten Bedingungen mit den üblichen Generatoren nicht eingehalten werden. In solchen Fällen werden dann Generatoren mit Ölkühlung und Ölschmierung eingesetzt. Das Öl, das zur Schmierung und Kühlung dient, wird aus dem Motorblock entnommen. Es hat sich gezeigt, daß für den Einsatz unter den geschilderten extremen Bedingungen schleifringlose Generatoren, also Generatoren mit einer feststehenden Erregerwicklung und einem Leitstückläufer, besonders geeignet sind.

Aus der US-A-3 078 408 ist ein ölgekühlter Generator bekannt, bei dem ein klauenförmiger Leitstückläufer nur an der Antriebsseite über ein Kugellager mit einem der beiden Lagerschilde verbunden ist, während der andere Lagerschild als Gleitlager für den Leitstückläufer ausgebildet ist. Die Erregerwicklung ist dort unmittelbar auf dem mit dem zweiten Lagerschild fest verbundenen· Innenpol angeordnet und kann nur unzureichend gekühlt werden, zumal in dem die Erregerwicklung übergreifenden, einen abwechselnden Magnetfluß den feststehenden Augsgangswicklungen zuführenden Leitstück schräg nach außen führende Aussparungen vorgesehen sind, durch welche bei der Drehbewegung des Leitstücks der zur Kühlung vorgesehene Ölstrom abgeschleudert wird. Hierdurch wird die Kühlung zusätzlich verschlechtert, weil sich dann sehr rasch Ölschaum bilden kann, dessen Wärmeleitwert wesentlich geringer als derjenige eines homogenen Kühlölstromes ist.

Der Zweck der Erfindung ist es, ausgehend von dem eingangs beschriebenen ölgekühlten Generator einen insgesamt verbesserten Generator zu schaffen, bei dem sowohl die Wicklungen wie auch weitere elektrische Bauelemente, insbesondere Gleichrichter für den Erregerstrom und für den Generatorlaststrom, gemeinsam in einem sinnvollen Ölkreislauf gekühlt werden.

Dafür sind die im Anspruch 1 angegebenen, kennzeichnenden Merkmale vorgesehen. Durch die zwischen der Erregerwicklung und dem feststehenden Innenpol in Achsrichtung verlaufende, zwischen den Rippen gebildeten Kanäle kann die Erregerwicklung wirkungsvoll gekühlt werden. Die eingangs geschilderte Entwicklung von Ölschaum kann in weiterer Ausgestaltung der Erfindung dadurch vermieden werden, daß die Zwischenräume des Leitstückläufers mit magnetisch nicht leitendem Material ausgefüllt werden, wobei radiale Bohrungen vorgesehen werden können, durch welche den Wicklungsköpfen der vom Stator getragenen Ausgangswicklung das aus dem Leitstück geschleuderte Kühlöl zugeführt wird.

Vorteile der Erfindung

Der erfindungsgemäße Generator mit den kennzeichnenden Merkmalen des Hauptanspruches hat gegenüber dem Stand der Technik den Vorteil einer speziellen Ausbildung des Wicklungsträgers für die Erregerwicklung. Der Wicklungsträger rastet fest auf dem Innenpol ein, gleichzeitig werden Kanäle für Ölführung zu den Wickelköpfen gebildet.

Durch die in den Unteransprüchen aufgeführten Maßnahmen sind vorteilhafte Weiterbildungen und Verbesserung des Hauptanspruch angegebenen Generators möglich. Besonders vorteilhaft ist, daß der gesamte Gleichrichter vorgefertigt und als Baueinheit in das Generatorgehäuse eingesetzt werden kann. Die Befestigungsbolzen dienen gleichzeitig als Anschlußbolzen und sind verdrehsicher in die Körper eingesetzt worden. Der Spannungsregler ist direkt auf einem Kühlkörper befestigt. Dadurch kann vorteilhafterweise ein einziger Regler in Normalausführung auch für eine zweipolig isolierte Ausführungsform des Generators verwendet werden. Außerdem ist der Spannungsregler durch den Einbau in den Generator vollkommen geschützt. Der Spannungsregler ist durch einen abnehmbaren Deckel zugänglich, so däß der Generator für einen Austausch des Spannungsreglers nicht demontiert werden muß. Auch die Kanäle für die Ölführung sind in vorteilhafter Weise neu gestaltet. Die Kühlkörper der Gleichrichterdioden sind U-förmig gebogen und auf ihren Schenkeln durch eine Isolierplatte bedeckt. Der Ölfluß wird durch eine senkrecht durch die Isolierplatte führende Bohrung direkt auf die Böden der Dioden gerichtet. Das Öl durchströmt die Diodenkammern nacheinander, und zwar so, daß es immer umgelenkt und vermischt wird. Dadurch ergibt sich eine bessere Wärmeabführ im Gleichrichter. Alle Diodenkammern werden gekühlt. Eine Gefahr einer Verstopfung eines einzelnen Parallelkanals wegen Schmutzablagerungen besteht also nicht. Die Lager des Generators werden gezielt geschmiert und gekühlt. Durch die sinnvolle Ölführung durch den Innenpol zum Leitstückläufer, durch die Bohrungen im Leitstückläufer werden sowohl der Kern, der Innenpol und der Leitstückläufer als auch die Wickelköpfe im Stator zweckmäßig gekühlt.

## Zeichnung

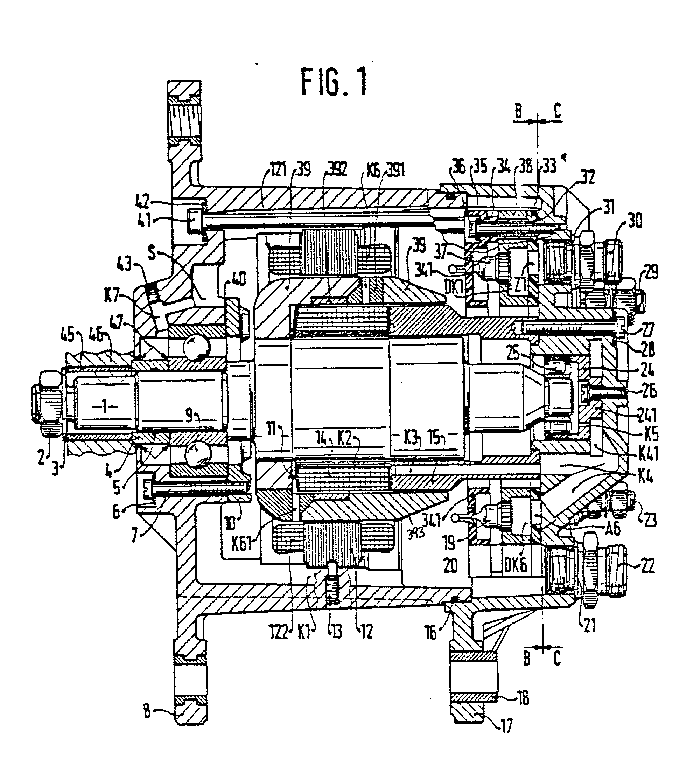

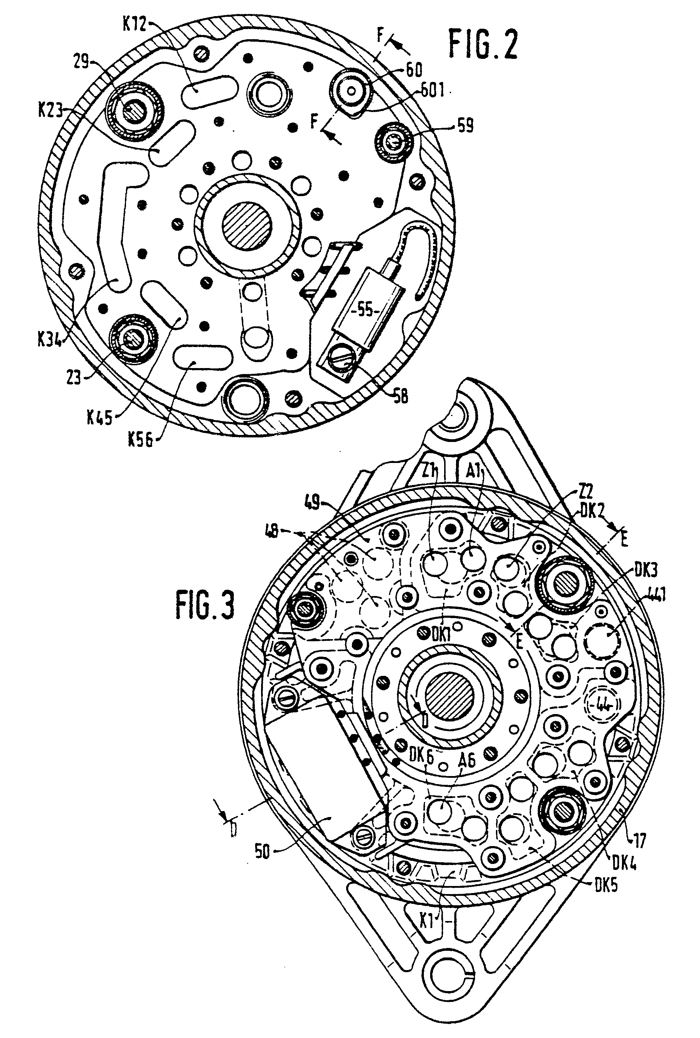

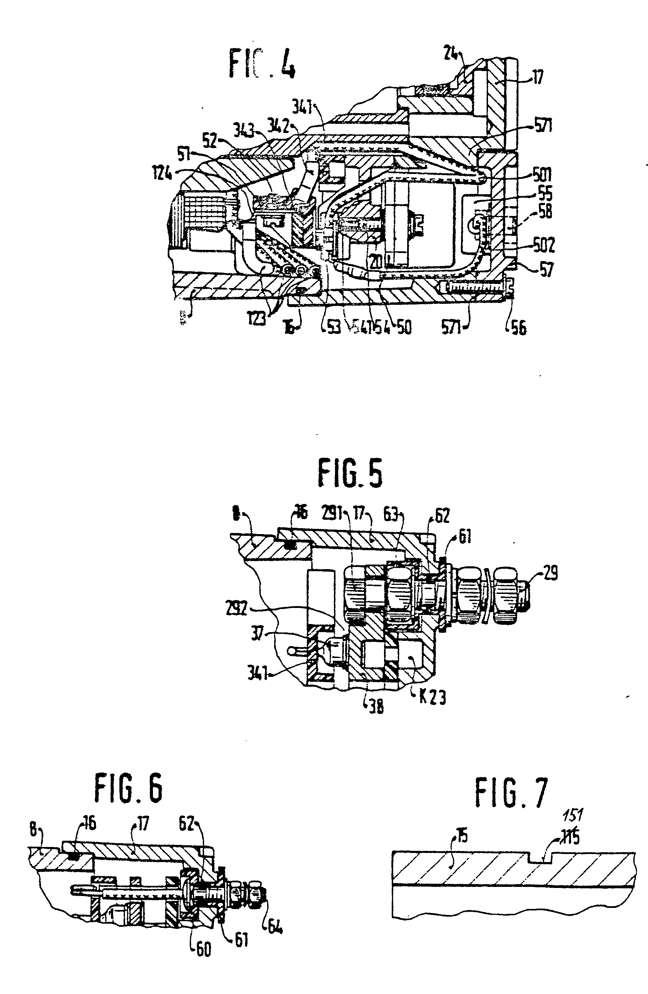

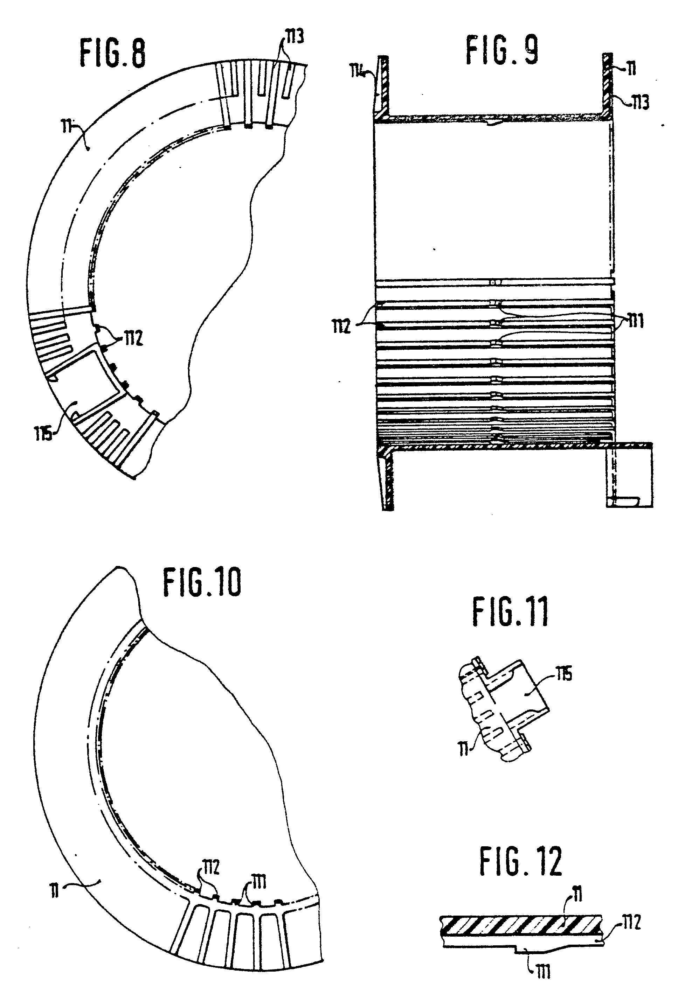

Die wichtigsten konstruktiven Merkmale eines Ausführungsbeispiels des erfindungsgemäßen ölgekühlten Generators mit einem Leitstückläufers ist in der Zeichnung dargestellt und in der nachfolgenden Beschreibung näher erläutert. Figur 1 zeigt einen Längsschnitt durch den Generator, Figur 2 einen Querschnitt entlang der Schnittlinien B-B, Figur 3 einen Querschnitt entlang der Linien C-C, die Figuren 4 bis 6 Einzelheiten, nämlich Schnitte entlang den Linien D-D, E-E, F-F, Figur 7 eine vergrößerte Darstellung einer Einzelheit aus dem Innenpol 15, die Figuren 8 bis 10 den Wickerkörper in beiden Draufsichten und in einer teilweise geschnittenen Seitenansicht, die Figur 11 eine Einzelheit und die Figur 1 eine vergrößerte Einzelheit.

## Beschreibung des Ausführungsbeispiels

Im Querschnitt durch den Generator nach Figur 1 ist eine Generatorwelle 1 mit Hilfe von Lagern 9 und 25 in den Gehäuseteilen 8 (Antriebslager) und 17 (Gleichrichterlager) gelagert. Das Lager 9 ist im Gehäuse 8 mit Hilfe eines Halterings 10·und Schrauben 7 eingespannt. Die beiden Gehäuseteile 8 und 17 sind durch die Schrauben 41 zusammengehalten. Mit einem Distanzring 4 und einer Mutter 2, einer Scheibe 3 und einem Keil 46 ist eine Riemenscheibe 45 auf der Welle 1 befestigt. Ein Stator 12 ist in das Gehäuse 8 eingeschrumpft und durch eine Stiftschraube 13 zusätzlich fixiert. Auf die Welle 1 ist ein Leitstückläufer 39 aufgeschraubt. Ein Kern 391 ist Bestandteil der Welle 1. Ein Ring 392 aus nicht magnetischem Material hält im Leitstückläufer 39 die beiden Polkränze zusammen. Ein Innenpol 15 ist mit Schrauben 27 auf das Gehäuseteil 17 gespannt. Zum Spannen des Generators dient eine Schiebebuchse 18.

Mit Hilfe eines Wicklungsträgers 11 ist eine Erregerwicklung 14 auf dem Innenpol 15 formschlüssig und kraftschlüssig befestigt. In den Figuren 8 bis 11 sind Einzelheiten des Wicklungsträgers 11 dargestellt. Bei der Montage wird der Wicklungsträger 11 auf den Innenpol 15 geschoben, dabei rasten Nocken 111 des Wicklungsträgers 11 (siehe die Einzelheit in Figur 9) — in einen Einstich 151 des Innenpols — siehe Einzelheit in Figur 7 — ein. Beim Wickeln der Erregerwicklung 14 wird durch einen entsprechend großen Wickelzug der Wicklungsträger 11 auf den Innenpol 15 gepreßt. Durch entsprechende Rippen 112 auf dem Wicklungsträger 11 werden zusammen mit der Oberfläche des Innenpols 15 Kanäle K2 gebildet. Der Leitstückläufer 39 ist mit nichtmagnetischem Material 393 ausgefüllt. Im Leitstückläufer 39 sind Bohrungen und Düsen K6 und K61 vorgesehen. Diese Bohrungen liegen gegenüber den Wickelköpfen 123 der Wicklung 122 des Ständers 12.

Der Wicklungsträger 11 weist Versteifungsrippen 113 auf an der Seite, mit der er am Innenpol 15 anliegt. Auf der Seite, die dem Polrad des Leitstückläufers 39 zugekehrt ist, sind Versteifungsrippen 114 angebracht. Zum Anschließen der Enden der Wicklung 14 ist weiter eine Wicklungsanschlußkammer 115 vorgesehen, dies zeigt die Einzelheit in Figur 11. In Figur 12 ist ein Nocken 111 in einer Rippe 112 des Wicklungsträgers 11 vergrößert dargestellt.

Ein Gleichrichter umfaßt Minuskühlkörper 20 mit drei Minusdioden 19 und einer Zusatzdiode 44, einen Pluskörper 38 mit drei Plusdioden 37 und einer Zusatzdiode 441 und einen Erregerdiodenkühlkörper 49 mit drei Erregerdioden 48. Weiter umfaßt der Gleichrichter eine Leiterplatte 34, in die Anschlußdrähte 341 eingespritzt sind, und eine Dicht- und Isolierplatte 33. Die drei Kühlkörper 20, 38 und 49 werden zusammen mit der Leitplatte 34 und der Isolierplatte 33 mit Scheiben 35 und Hohlnieten 32 zu einer Baugruppe vernietet. Diese Gleichrichter-Baugruppe ist mit Schrauben 36 am Gehäuse 17 befestigt. Die Baugruppe Gleichrichter trägt Anschlußbolzen 23, 29 und 59. In Figur 5 ist der Anschlußbolzen 29 für B⁺, teilweise im Schnitt, dargestellt. Der Anschlußbolzen 23 für B⁻ und der Anschlußbolzen 59 für D⁺ haben die gleichen Konstruktionsmerkmale wie der Anschlußbolzen 29. Die Anschlußbolzen 23, 29 und 59 sind mit ihrem Sechskantkopf direkt in die zugehörigen Kühlkörper eingesetzt. Als Beispiel ist in Figur 5 der Anschlußbolzen 29 mit seinem Sechskantkopf 291 gezeigt, der in einer Ausnehmung 292 des Kühlkörpers 38 sitzt. Damit ergibt sich eine gute Verdrehsicherung bei der Montage. Die Anschlußbolzen 23, 29 und 59 sind durch Isolierbuchsen 61 und 63 gegenüber dem Gehäuse 17 isoliert. Zwischen den Isolierbuchsen 61 und 63 liegt ein O-Ring 62. Bei der Montage der Anschlußbolzen 23, 29 und 59 wird der O-Ring 62 so zusammengedrückt, daß die Verschraubung der Bolzen dicht wird. Sollte ein weiterer Anschlußbolzen 64, beispielsweise für einen W-Anschluß, vorgesehen werden, so wird er in ähnlicher Weise gestaltet wie die Anschlußbolzen 23, 29 und 59. Dabei dient der Nocken 601 als Verdrehsicherung.

Zur Abdichtung des Generatorgehäuses dient für die Welle 1 ein Wellendichtring 47 zwischen dem Distanzring 4 und dem Lager 9, der O-Ring 5 zwischen dem Wellendichtring 47 und der Welle 1, der O-Ring 16 zwischen den beiden Gehäuseteilen 8 und 17, die USIT-Ringe 6, 28 und 42 der Spannschrauben 7, 27 und 41, die Flachdichtringe 21 und 31 an Einschraubstutzen 22 und 30, die Dichtscheibe 40 zwischen dem Haltering 10 und dem Gehäuse 8 und die Stiftschraube 43 im Gehäuse 8. Die Gewindeverschraubungen der Stiftschrauben 43, der Spannschrauben 41, 36, der Schraube 26 und der Stiftschraube 13 sind durch ein geeignetes Dichtmittel, beispielsweise durch Mikroverkapselung, abgedichtet. Die Schraube 26 verhindert, daß eine Trennscheibe 24 zwischen einem Ölkanal K41 und dem Außenring des Lagers 25 den Außenring des Lagers 25 in das Generatorinnere hineinschiebt. Die Trennscheibe 24 dient einerseits als Trennwand zwischen dem Kanal K41 und dem Lager 25, sie ermöglicht andererseits durch einen Kanal K5, die Versorgung des Lagers 25 mit Öl. Der Kanal K5 soll symbolisch die Öldurchlässigkeit der an seinem gesinterten Material bestehenden Trennscheibe 24 darstellen. Sie dient außerdem als Anschlag beim Einpressen des Außenrings des Lagers 25.

In den Figuren 3 und 4 ist zu erkennen, daß ein Spannungsregler 50 durch Schrauben 54 auf dem entsprechend ausgebildeten Minuskühlkörper 20 befestigt ist. Dies hat den Vorteil, daß ein Spannungsregler 50 in Normalausführung auch für ein Generatorsystem mit beidpoliger Isolation verwendet werden kann. Außerdem ist der Spannungsregler 50 durch den Einbau in den Generator vollkommen geschützt. Der Spannungsregler 50 kann nach der Abnahme des Deckels 57 im Gehäuse 17 ausgetauscht werden. Die Anschlußkabel 501 des Spannungsreglers 50 sind so lang ausgeführt, daß bei einem Austausch des Spannungsreglers 50 der Generator nicht demontiert werden muß. Wenn der Regler durch die Öffnung 571 im Gehäuse 17 aus dem Generator herausgezogen ist, können die Schrauben 53 außerhalb des Generatorgehäuses gelöst werden. Auf der Innenseite des Deckels 57 ist ein Kondesator 55 mit der Schraube 58 befestigt. Der Deckel 57 selbst ist mit den Schrauben 56 auf dem Gehäuse 17 befestigt. Zwischen dem Deckel 57 und dem Gehäuse 17 ist zweckmäßigerweise ein Dichtmittel vorgesehen. Kabelschuhe 124 der Anschlußleitungen 123 des Ständers 12 sind mit Kabelschuhen 343 der Anschlußleitungen 342 der Gleichrichter-Baugruppe mit Hilfe von Schrauben 52 verklemmt. Die Schrauben 52 sind von einem Anschlußwinkel 51 getragen. Der Anschlußwinkel 51 ist mit den Schrauben 541 auf der Rückseite des Minuskühlkörpers 20 befestigt.

Die Kühlkörper 20, 38 und 49 sind U-förmig ausgebildet. Auf ihren Schenkeln liegt die Isolierplatte 33. Durch diese Anordnung werden Diodenkammern DK1 bis DK6 gebildet. In den Boden der Diodenkammern DK1 bis DK6 in den Kühlkörpern 20, 38 und 49 sind die Dioden 19, 37 und 48 so eingesetzt, daß ihr Boden in die zugehörige Diodenkammer DK1 bis DK6 ragt. Die Ölzufuhr erfolgt über einen Einschraubstutzen 30 im Gehäuseteil 17. Durch eine Zuflußbohrung Z1 in der Isolierplatte 33 fließt das Öl in die Diodenkammer DK1. Durch eine Abflußbohrung A1 fließt das Öl weiter zu einem Kanal K12. Dieser Kanal K12 ist eine lange U-förmige Vertiefung im als Lagerschild dienenden Gehäuseteil 17 und bildet mit der Abflußbohrung A1 und einer Zuflußbohrung Z2 einen Kanal, der Öl von der Diodenkammer DK1 nach der Diodenkammer DK2 fließen läßt. Auch weitere Kanäle K23, K34, K45 und K56 sind so ausgelegt, daß durch die Zuflußbohrungen Z3 bis Z6 und die Abflußbohrung Z3 bis Z6 ein Ölfluß durch die Diodenkammern DK3 bis DK6 ergibt. Anzufügen ist noch, daß die Zuflußbohrungen Z senkrecht in die Isolierplatte 33 über den Böden der Dioden 19 und 37 eingebracht sind. Durch die Abflußbohrung A6 fließt das Öl zu den Kanälen K4 und K41. K4 und K41 sind mehrere Bohrungen und ein Inneneinstich im Gehäuseteil 17. Somit wird das Öl zu einem Kanal 3 und zum Kanal 5 geleitet. Über den Kanal 5 wird wie oben schon geschildert das Lager 25 mit Öl versorgt und der Kanal K3 besteht aus mehreren Bohrungen und einem Planeinstich im Innenpol 15. Über die Kanäle K3 wird den ebenfalls erwähnten Kanälen K2 Öl zugeführt. Durch die Kanäle K2 fließt das Öl in die Ringspaltkanäle zwischen dem Wicklungsträger 11 und dem Leitstückläufer 39 und wird dann durch die Düsen und Kanäle K6 und K61 auf die Wicklungsköpfe 121 im Ständer 12 versprüht. In der Sammeltasche S im Gehäuseteil 8 wird das Öl in Nebel- oder in Tropfenform gesammelt und durch Bohrungen K7 zum Antriebslager 9 geleitet. Vom Gehäuseteil K8 strömt das Öl durch Kanäle K1, die sich im Boden des Gehäuseteils K8 befindet, zu einem Einschraubstutzen 22, vom Einschraubstutzen 22 aus wird das Öl dann abgeführt oder abgesaugt.

**Ansprüche**

1. Ölgekühlter Generator, insbesondere Drehstrom-Generator für Kraftfahrzeuge, mit einem Gehäuse (8, 17), einem eine Ausgangswicklung tragenden Stator (12), einem auf einer Gehäusewelle (1), die mit Wellenlagern (9, 25) im Generatorgehäuse (8, 17) gelagert ist, rotierbaren Rotor (39, 391), einer Erregerwicklung (14), Anschlußbolzen (23, 29, 59, 64) für die Ausgangsleistung und die Erregerleistung und Kanälen (K2) zum Führen der Ölströme, bei dem die Erregerwicklung (14) auf einem Innenpol (15) am Generatorgehäuse (8, 17) befestigt und der Rotor (39, 391) einen zwischen dem Innenpol (15) und dem Stator (12) rotierbaren Leitstückläufer (39) und einen innerhalb des Innenpols (15) rotierbaren Kern (391) umfaßt, dadurch gekennzeichnet, daß die Erregerwicklung (14) mit Hilfe eines Wicklungsträgers (11), der wenigstens einen Nocken (111) aufweist, auf dem Innenpol (15), der einen dem Nocken (111) zugeordneten Einstich (151) aufweist, befestigt ist, wobei der Nocken (111) in den Einstich (151) eingerastet ist, und daß der Wicklungsträger (11) auf seiner dem Innenpol (15) zugewandten Seite Rippen (112) zum Bilden von Kanälen (K2) zwischen dem Wicklungsträger (11) und dem Innenpol (15) aufweist.

2. Generator nach Anspruch 1, dadurch gekennzeichnet, daß die Zwischenräume des Leitstückläufers (39) zum Erreichen einer mechanischen Baueinheit mit magnetisch nicht leitendem Material (393) ausgefüllt sind und daß den Wicklungsköpfen (121) der im Stator (12) getragenen Ausgangswicklung (122) gegenüberliegend radiale als Bohrungen ausgeführte Kanäle (K6, K61) vorgesehen sind.

3. Generator nach einem der vorhergehenden Ansprüche mit einem eingebauten Gleichrichter, dadurch gekennzeichnet, daß der Gleichrichter einen wenigstens Minusdioden (19) tragenden Minuskühlkörper (20), einen wenigstens Plusdioden (37) tragenden Pluskühlkörper (38) und einen Erregerdioden (48) tragenden Erregerkühlkörper (49) sowie eine die Verbindungen der Dioden untereinander, zum Stator (12), zur Erregerwicklung (14) und zu den Anschlußbolzen (23, 29, 59, 64) tragende Leiterplatte (34) umfaßt.

4. Generator nach Anspruch 3, dadurch gekennzeichnet, daß die Anschlußbolzen (23, 29, 59) einen Sechskant (231, 291, 591) und die zugehörigen Kühlkörper (20, 38, 49) Ausnehmungen (232, 292, 592) ähnlich einem Gabelschlüssel aufweisen und daß zum Bewirken einer Sicherheit gegen ein Verdrehen die Sechskante (231, 291, 591) in die Ausnehmungen (232, 292, 592) eingreifen.

5. Generator nach einem der vorhergehenden Ansprüche, dadurch gekennzeichnet, daß zwischen dem antriebsfernen Lager (25) der Welle (1) und dem Gehäuse (17) eine Trennscheibe (24) aus öldurchlässigem gesintertem Material eingefügt ist.

6. Generator nach Anspruch 5, dadurch gekennzeichnet, daß die Trennscheibe (24) zum Bilden von Kanälen (K41) Erhöhungen (241) aufweist, die sich gegen das Gehäuse (17) abstützen.

7. Generator nach einem der vorhergehenden Ansprüche mit einem Spannungsregler, dadurch gekennzeichnet, daß im Gehäuse (17) ein lediglich den Spannungsregler (50) abdekkender Deckel (57) vorgesehen ist.

8. Generator nach einem der vorhergehenden Ansprüche, dadurch gekennzeichnet, daß im Gehäuse (8) eine Sammeltasche (S) vorgesehen ist und ein Kanal (K7) von der Sammeltasche (S) zu zugehörigen Lager (9) führt.

9. Generator nach einem der vorhergehenden Ansprüche, dadurch gekennzeichnet, daß die Kühlkörper (38, 20) U-förmig ausgebildet sind und so Diodenkammern (DK1 ... DK6) bilden und daß die Dioden (19, 37) einseitig in die Diodenkammern (DK1 ... DK6) ragen.

10. Generator nach Anspruch 9, dadurch gekennzeichnet, daß die einzelnen Diodenkammern (DK1 ... DK6) für den Ölfluß in Serie geschaltet und über Zuflußbohrungen (Z2 ... Z6), Kanäle (K12, K23, K34, K45, K56) und Ablaßbohrungen (A1 ... A5) miteinander verbunden sind.

11. Generator nach Anspruch 10, dadurch gekennzeichnet, daß die Zuflußbohrungen (Z1 ... Z6) gegenüber den Böden der Dioden (19, 37, 48) angeordnet sind.

12. Generator nach einem der Ansprüche 9 bis 11, dadurch gekennzeichnet, daß Kanäle (K4, K5, K41) von der letzten Diodenkammer (DK6) zum zugeordneten Lager (25) und den Kanälen (K3) im Innenpol (15) führen.

13. Generator nach Anspruch 12, dadurch gekennzeichnet, daß die Kanäle (K3) im Innenpol (15) mit Kanälen (K2) zwischen dem Innenpol (15) und dem Wicklungsträger (11) verbunden sind.

**Claims**

1. An oil-cooled generator, particularly a three-phase generator for motor vehicles, having a housing (8, 17), a stator (12) which carries an output winding, a rotor (39, 391) which can be rotated on a housing shaft (1) which is supported by means of shaft bearings (9, 25) in the generator housing (8, 17), an exciter winding (14), connecting bolts (23, 29, 59, 64) for the output power and the exciter power and ducts (K2) for conducting the oil flows, in which generator the exciter winding (14) is mounted on an internal pole (15) at the generator housing (8, 17) and the rotor (39, 391) comprises a conducting-piece rotor (39) which can be rotated between the internal pole (15) and the stator (12) and a core (391) which can be rotated inside the internal pole (15), characterised in that the exciter winding (14) is mounted, with the aid of a winding support (11) which is provided with at least one nose (111), on the internal pole (15) which is provided with a recess (151) which is associated with the nose (111), the nose (111) being locked into the recess (151), and that the winding support (11) has on its side facing the internal pole (15) ribs (112) for forming ducts (K2) between the winding support (11) and the internal pole (15).

2. A generator according to Claim 1, characterised in that the intermediate spaces of the conducting-piece rotor (39) are filled with magnetically non-conducting material (393) in order to achieve a mechanical constructional unit and that radial ducts (K6, K61), constructed as drilled holes, are provided opposite to the winding heads (121) of the output winding (122) carried in the stator (12).

3. A generator according to one of the preceding claims, having an inbuilt rectifier, characterised in that the rectifier comprises a negative heat sink (20) which carries at least negative diodes (19), a positive heat sink (38) which carries at least positive diodes (37), and an exciter heat sink (49) which carries exciter diodes (48) and a conductor panel (34) which carries the connections of the diodes to each other, to the stator (12), to the exciter winding (14) and to the connecting bolts (23, 29, 59, 64).

4. A generator according to Claim 3, characterised in that the connecting bolts (23, 29, 59) have a hexagonal head (231, 291, 591) and the associated heat sinks (20, 38, 49) have recesses (232, 292, 592) which are similar to an openended spanner and that the hexagonal heads (231, 291, 591) engage the recesses (232, 292, 592) in order to effect security against turning.

5. A generator according to one of the preceding claims, characterised in that an isolating disc (24) of a sintered material which is permeable to oil is inserted between the bearing (25), which is remote to the driven end, of the shaft (1) and the housing (17).

6. A generator according to Claim 5, characterised in that the isolating disc (24) is provided, for the purpose of forming ducts (K41), with elevations (241) which are supported on the housing (17).

7. A generator according to one of the preceding claims, having a voltage regulator, characterised in that in the housing (17) a cover (57) is provided which only covers the voltage regulator (50).

8. A generator according to one of the preceding claims, characterised in that in the housing (8) a collecting pocket (S) is provided and a duct (K7) lead from the collecting pocket (S) to the associated bearing (9).

9. A generator according to one of the preceding claims, characterised is that the heat sinks (38, 20) are constructed to be U-shaped and thus form diode chambers (DK1 ... DK6) and that the diodes (19, 37) project on one side into the diode chambers (DK1 ... DK6).

10. A generator according to Claim 9, characterised in that the individual diode chambers (DK1 ... DK6) are connected in series for the oil flow and are joined to each other via feed holes (Z2 ... Z6), ducts (K12, K23, K34, K45, K56) and outlet holes (A1 ... A5).

11. A generator according to Claim 10, characterised in that the feed holes (Z1 ... Z6) are arranged opposite to the bases of the diodes (19, 37, 48).

12. A generator according to one of Claims 9 to 11, characterised in that ducts (K4, K5, K41) lead from the last diode chamber (DK6) to the associated bearing (25) and the ducts (K3) in the internal pole (15).

13. A generator according to Claim 12, characterised in that the ducts (K3) in the internal pole (15) are connected to ducts (K2) between the internal pole (K15) and the winding support (11).

**Revendications**

1. Générateur refroidi à l'huile, notamment générateur de courant triphasé pour véhicules automobiles, avec un boîtier (8, 17), un stator (12) portant un enroulement de sortie, un rotor (39, 391) susceptible de tourner sur un arbre de boîtier (1) monté dans le boîtier (8, 17) du générateur avec des paliers d'arbres (9, 25), avec un enroulement d'excitation (14), des boulons de raccordement (23, 29, 59, 64) pour la puissance de sortie et pour la puissance d'excitation, et avec des canaux (K2) pour le passage de l'huile, générateur dans lequel l'enroulement d'excitation (14) est fixé sur un pôle interne (15) sur le boîtier (8, 17) du générateur, tandis que le rotor (39, 391) comprend un rotor à transducteur (39) susceptible de tourner entre le pôle interne (15) et le stator (12) et un noyau (391) susceptible de tourner à l'intérieur du pôle interne (15), générateur caractérisé en ce que l'enroulement d'excitation (14) est fixé à l'aide d'un support de bobinage (11) qui comporte au moins une came (111) sur le pôle interne (15) qui comporte une encoche (151) associée à la came (111), la came (111) étant enclenchée dans l'encoche (151) et le support de bobinage (11) comportant sur sa face tournée vers le pôle interne (15) des nervures (112) en vue de ménager des canaux (K2) entre le support de bobinage (11) et le pôle interne (15).

2. Générateur selon la revendication 1, caractérisé en ce que les espaces intermédiaires du rotor à transducteur (39) sont remplis d'un matériau non conducteur magnétiquement (393) pour obtenir une unité constitutive mécanique, et que des canaux radiaux (K6, K61) réalisés sous forme de perçages sont prévus en face des têtes d'enroulement (121) de l'enroulement de sortie (122) supporté dans le stator (12).

3. Générateur selon l'une des précédentes revendications avec un redresseur incorporé, générateur caractérisé en ce que le redresseur comporte un corps de refroidissement négatif (20) portant au moins une diode négative (19) un corps de refroidissement positif (38) portant au moins une diode positive (37) et un corps de refroidissement d'excitation (49) portant une diode d'excitation (48) ainsi qu'une plaque conductrice (34) portant les liaisons des diodes entre elles vers le stator (12), vers l'enroulement d'excitation (14) et vers les boulons de raccordement (23, 29, 59, 64).

4. Générateur selon la revendication 3, caractérisé en ce que les boulons de raccordement (23, 29, 59) comportent un six-pans (231, 291, 591) et que les corps de refroidissement qui leur sont associés (29, 38, 49) comportent des évidements (232, 292, 592) analogues à une clé anglaise, et que, pour assurer un blocage en rotation, les six pans (231, 291, 591) viennent en prise dans les évidements (232, 292, 592).

5. Générateur selon l'une des précédentes revendications, caractérisé en ce que, entre le palier (25), éloigné de l'entraînement, de l'arbre (1) et le boîtier (17) est insérée une rondelle de séparation (24) en un matériau fritté perméable à l'huile.

6. Générateur selon la revendication 5, caractérisé en ce que la rondelle de séparation (24), pour ménager des canaux (K41) comporte des saillies (241) prenant appui contre le boîtier (17).

7. Générateur selon une des précédentes revendications, avec un régulateur de tension, générateur caractérisé en ce qu'il est prévu sur le boîtier (17) un couvercle (57) recouvrant uniquement le régulateur de tension (50).

8. Générateur selon une des précédentes revendications, caractérisé en ce qu'il est prévu dans le boîtier (17) une poche collectrice (S) et un canal (K7) allant de cette poche collectrice (S) au palier correspondant (9).

9. Générateur selon une des précédentes revendications, caractérisé en ce que les corps de refroidissement (38, 20) sont en forme de U et ménagent ainsi des chambres de diodes (DK1 à DK6), les diodes (19, 37) pénétrant d'un côté dans ces chambres de diodes (DK1 à DK6).

10. Générateur selon la revendication 9, caractérise en ce que les différentes chambres de diodes (DK1 à DK6) sont branchées en série pour la circulation d'huile et sont reliées ensemble par l'intermédiaire de perçages d'alimentation (Z2 à Z6), de canaux (K12, K23, K34, K45, K56) et de perçages d'évacuation (A à A5).

11. Générateur selon la revendication 10, caractérisé en ce que les perçages d'alimentation (Z1 à Z6) sont disposés en face des fonds des diodes (19, 37, 48).

12. Générateur selon une des revendications 9 à 11, caractérisé en ce que des canaux (K4, K5, K41) vont de la dernière chambre de diode (DK6) vers le palier correspondant (25) et vers les canaux (K3) dans le pôle interne (15).

13. Générateur selon la revendication 12, caractérisé en ce que les canaux (K3) dans le pôle interne (15) sont reliés à des canaux (K2) entre le pôle interne (15) et les supports de bobinage (11).

FIG. 1

FIG.2

FIG.3

FIC.4

FIG.5

FIG.6

FIG.7

FIG.8

FIG.9

FIG.10

FIG.11

FIG.12